# EUROPÄISCHE PATENTSCHRIFT

(11) **EP 1 034 992 B1**
(45) Veröffentlichungstag und Bekanntmachung des Hinweises auf die Patenterteilung: **15.06.2005**
(21) Anmeldenummer: 00102239.1
(22) Anmeldetag: 14.02.2000
(51) Int. Cl.: B60S 1/38

(54) **Wischblatt für einen Scheibenwischer**
Wiper blade for a windscreen wiper
Balai pour essuie-glace

(30) Priorität: 06.03.1999 DE 19909940
(43) Veröffentlichungstag der Anmeldung: 13.09.2000
(73) Patentinhaber: Bayerische Motoren Werke Aktiengesellschaft, 80809 München (DE)
(72) Erfinder: Grasser, Dieter, 80992 München (DE)

(56) Entgegenhaltungen:
- EP-A- 0 439 390
- EP-A- 0 594 451
- DE-A- 2 951 688
- DE-A- 3 936 597
- US-A- 5 048 146

## Beschreibung

Die Erfindung betrifft ein Wischblatt für einen Scheibenwischer nach dem Oberbegriff des Anspruchs 1.

Bei bekannten Wischblättem sind die Wischgummis über Krallenbügel eingesetzt. Aufgrund der zunehmenden Länge der Wischblätter ist eine entsprechend hohe Anzahl von Anbindungsstellen zwischen Wischgummi und einem zweiten Element des Wischblattes erforderlich. Der Austausch des eigentlichen Verschleißteils, des Wischgummis, wird hierdurch komplizierter und ist für den Fahrzeugnutzer nicht mehr akzeptabel.

Aufgabe der Erfindung ist es, die Anbindung eines Wischgummis an ein Wischblatt eines Scheibenwischers zu verbessern.

Diese Aufgabe wird durch die Merkmale des Anspruchs 1 gelöst, indem eine Klettverbindung den Wischgummi an das Wischblatt anbindet. Die Erfindung kann sowohl bei Krallenbügelsystemen als auch bei Balkenwischblättern eingesetzt werden.

Zwar ist es aus der US 5,048,146 A bekannt, ein Element eines Klettverschlusses an einer oder an beiden Flanken eines Wischgummis, unmittelbar anschließend an die Wischlippe, anzuordnen. Bei dem bekannten Wischgummi dient das Element des Klettverschlusses jedoch lediglich dazu, durch seine raue Oberfläche Verunreinigungen auf der Windschutzscheibe eines Kraftfahrzeuges zu entfernen. Eine Verbindung des bekannten Wischgummis mit einem Wischblatt, das seinerseits ein zweites Element eines Klettverschlusses aufweist, ist nicht vorgesehen.

Vorteilhafte Ausgestaltungen der Erfindung sind Gegenstand der Unteransprüche.

Mögliche Ausführungsbeispiele der Erfindung sind in der Zeichnung dargestellt und werden nachfolgend näher erläutert. Es zeigt:
- Figur 1: das Prinzip der Erfindung anhand einer perspektivischen Darstellung eines Wischblattes mit einem Wischgummi,
- Figur 2: ein bekanntes Wischblatt im Querschnitt,
- Figur 3: ein erstes Ausführungsbeispiel eines erfindungsgemäßen Wischblattes im Querschnitt,
- Figur 4: eine vergrößerte Darstellung des Bereiches X aus Figur 3, .
- Figur 5: ein zweites Ausführungsbeispiel eines erfindungsgemäßen Wischblattes im Querschnitt,
- Figuren 6 und 7: Balkenwischblätter mit einer erfindungsgemäßen Anbindung des Wischgummis, im Querschnitt und
- Figur 8: eine vergrößerte Darstellung der Einzelheit Y aus Figur 7.

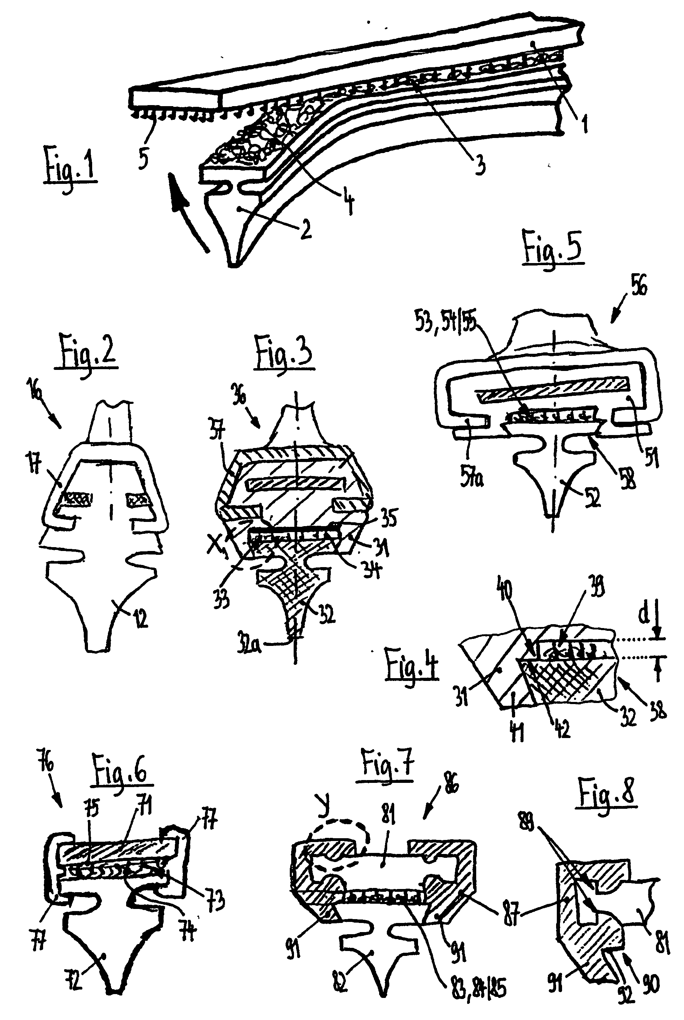

Figur 1 zeigt einen Befestigungsabschnitt 1 eines nicht weiter dargestellten Wischblattes, an den ein Wischgummi 2 über eine in ihrer Gesamtheit mit 3 bezeichnete Klettverbindung angebunden ist. Hierzu weist der Wischgummi 2 in seinem scheibenabgewandten Bereich ein erstes Element 4 der Klettverbindung 3 auf, das als Schlaufenteil ausgebildet ist. Entsprechend trägt der Befestigungsabschnitt 1 an seiner Unterseite ein zweites Element 5 der Klettverbindung 3, die als Hakenteil ausgebildet ist. Gleichwirkend ist auch eine vertauschte Anordnung von Haken- und Schlaufenteil an Wischgummi 2 bzw. Befestigungsabschnitt 1 möglich.

Figur 2 zeigt ein konventionell aufgebautes Wischblatt 16, bei dem der Wischgummi 12 über Krallenbügel 17 unmittelbar gehalten wird.

Im Vergleich hierzu ist in Figur 3 die Anwendung der Erfindung anhand eines Wischblattes 36 dargestellt, das ebenfalls als Federkrallenbügelsystem ausgebildet ist. Die Krallenbügel 37 dieses erfindungsgemäßen Wischblattes 36 halten einen als Wischgummiträger ausgebildeten Befestigungsabschnitt 31, der an seiner Unterseite einen Wischgummi 32 in einer Ausnehmung 38 aufnimmt. Die Anbindung des Wischgummis 32 an den Befestigungsabschnitt 31 erfolgt über eine Klettverbindung 33. Zusätzlich bilden die Randabschnitte 41 des Befestigungsabschnittes 31 eine schwalbenschwanzförmige Führung für den Wischgummi 32, wodurch eine zusätzliche Fixierung erreicht wird. Außerdem wird die Klettverbindung 33 hierdurch vor Verschmutzung geschützt.

Wie insbesondere aus Figur 4 näher hervorgeht, weist der Befestigungsabschnitt 31 eine Vertiefung 39 auf, die über eine Stufe 40 mit einer Tiefe d gegenüber der Ausnehmung 38 abgesetzt ist. Am Grund der Vertiefung 39 ist das zweite Element 35 der Klettverbindung 33 einvulkanisiert, während die Oberseite des Wischgummis 32 das erste Element 34 der Klettverbindung 33 trägt, das ebenfalls durch Vulkanisation mit dem Wischgummi 32 verbunden ist. Die Stufe 40 erzeugt definierte Auflageflächen 42 für den Wischgummi 32, so daß unabhängig von den naturgemäß in einer Klettverbindung 33 auftretenden Höhendifferenzen der Wischgummi 32 mit seiner Wischlippe 32a über der Länge des Wischblattes 36 gleichmäßig auf der Scheibe aufliegt.

Die Anbindung der Elemente 34 und 35 der Klettverbindung 33 an den Wischgummi 32 bzw. den Befestigungsabschnitt 31 kann selbstverständlich auch durch Verklebung erfolgen.

Im Gegensatz zu Wischblättern 16, wie in Figur 2 dargestellt, bei denen die Federbügel 17 zum Austausch des Wischgummis 12 aufgebogen werden müssen, ist bei dem erfindungsgemäßen Wischblatt 36 gemäß den Figuren 3 und 4 der Austausch des Wischgummis 32 durch einfaches Abziehen vom Befestigungsabschnitt 31 möglich. Das Einsetzen eines neuen Wischgummis 32 erfolgt in einfacher Weise durch Einlegen des Wischgummis 32 in die Ausnehmung 38. Die Wischgummis 32 können als Meterware produziert und in den Handel gebracht werden, wobei der Fahrzeugnutzer die jeweils benötigte Wischgummilänge entsprechend der Länge des Wischblattes selbst herstellen kann.

Das Ausführungsbeispiel gemäß Figur 5 stellt ein Wischblatt 56 mit einer vergleichsweise geringen Höhenerstreckung dar. Hierzu ist die Ausnehmung 58 des Wischgummiträgers 51 in etwa auf Höhe der nach innen umgebogenen Bügel 57a vorgesehen. Im übrigen entspricht der Aufbau des Wischblattes 56 dem des Wischblattes 36 aus Figur 3, mit einem Wischgummi 52 und einer Klettverbindung 53 aus zwei Elementen 54 und 55.

Die Erfindung läßt sich in gleicher Weise auch bei Balkenwischblättem anwenden, wie in den Figuren 6 bis 8 dargestellt. Das Balkenwischblatt 76 gemäß Figur 6 weist einen als Befestigungsabschnitt dienenden Federstahlträger 71 auf, an den über eine Klettverbindung 73 ein Wischgummi 72 angebunden ist. Erstes und zweites Element 74 bzw. 75 der Klettverbindung 73 sind an den Wischgummi 72 anvulkanisiert bzw. mit dem Federstahlträger 71 durch Verklebung verbunden. Seitliche Halteeinrichtungen 77 fixieren den Wischgummi 72 zusätzlich am Träger 71. Die Halteeinrichtung 77 ist beispielsweise als umlaufendes Halteband ausgebildet. Ebenso ist eine Ausgestaltung in Form zweier Halteklammern denkbar, die zu beiden Seiten des Wischblattes 76 angeordnet sind.

Die Figuren 7 und 8 zeigen ein Wischblatt 86, dessen Wischgummi 82 über eine Klettverbindung 83 mit zwei Elementen 84/85 und Halteklammem 87 fixiert ist. Des weiteren sind an den Halteklammem 87 zwei Randabschnitte 91 als schwalbenschwanzartige Führungen ausgebildet, zwischen denen der Wischgummi 82 zusätzlich gehalten wird. Durch Stufen 90 an den Halteklammern 87 werden definierte Auflageflächen 92 für den Wischgummi 82 geschaffen. Die Halteklammem 87 werden über Rastverbindungen 89 auf den Federstahlträger 81 aufgeklipst.

## Patentansprüche

1. Wischblatt für einen Scheibenwischer zur Reinigung einer Scheibe eines Fahrzeuges, mit einem Wischgummi,
**dadurch gekennzeichnet, daß** am Wischgummi (2, 32, 52, 72, 82) ein erstes Element (4, 34, 54, 74, 84) einer Klettverbindung (3, 33, 53, 73, 83) vorgesehen ist, das mit einem zweiten Element (5, 35, 55, 75, 85) der Klettverbindung (3, 33, 53, 73, 83) zusammenwirkt, das an einem Befestigungsabschnitt (1, 31, 51, 71, 81) des Wischblattes (36, 56, 76, 86) angeordnet ist.

2. Wischblatt nach Anspruch 1,
**dadurch gekennzeichnet, daß** das erste Element (4, 34, 54, 74) der Klettverbindung (3, 33, 53, 73, 83) durch Vulkanisation mit dem Wischgummi (2, 32, 52, 72, 82) verbunden ist.

3. Wischblatt nach Anspruch 1 und/oder 2,
**dadurch gekennzeichnet, daß** der Befestigungsabschnitt (31, 51) am Wischblatt (36, 56) aus einem elastomeren Material besteht, das in Federkrallenbügel (37, 57) des Wischblattes (36, 56) eingesetzt ist.

4. Wischblatt nach Anspruch 3,
**dadurch gekennzeichnet, daß** das zweite Element (35, 55) der Klettverbindung (33, 53) durch Vulkanisation mit dem Befestigungsabschnitt (31, 51) verbunden ist.

5. Wischblatt nach einem der vorgenannten Ansprüche,
**dadurch gekennzeichnet, daß** am Befestigungsabschnitt (31, 51) eine in Längsrichtung des Wischgummis (32, 52) verlaufende Ausnehmung (38, 58) zur formschlüssigen Aufnahme des Wischgummis (32, 52) vorgesehen ist.

6. Wischblatt nach Anspruch 5,
**dadurch gekennzeichnet, daß** die Ausnehmung (38, 58) einen Hinterschnitt (41) zur zusätzlichen formschlüssigen Fixierung des Wischgummis (32, 52) aufweist.

7. Wischblatt nach Anspruch 5 oder 6,
**dadurch gekennzeichnet, daß** die Elemente (34, 35; 54, 55) der Klettverbindung (33, 53) in eine Vertiefung (39) der Ausnehmung (38, 58) eingesetzt sind, wobei die Vertiefung (39) über eine Stufe (40) gegenüber der Ausnehmung (38, 58) abgesetzt ist und durch die Stufe (40) definierte Auflageflächen (42) für den Wischgummi (32, 52) gebildet werden.

8. Wischblatt nach einem der vorgenannten Ansprüche,
**dadurch gekennzeichnet, daß** das zweite Element (75, 85) der Klettverbindung (73, 83) durch Verklebung mit dem Befestigungsabschnitt (71, 81) des Wischblattes (76, 86) verbunden ist.

9. Wischblatt nach Anspruch 8,
**gekennzeichnet durch** eine den Befestigungsabschnitt (71, 81) des Wischblattes (76, 86) und den Wischgummi (72, 82) formschlüssig verbindende Halteeinrichtung (77, 87), die **durch** Einrasten seitlich an das Wischblatt (76, 86) anbringbar ist.

10. Wischblatt nach Anspruch 9,
**dadurch gekennzeichnet, daß** die Halteeinrichtung (77, 87) Mittel (90, 92) aufweist, die eine definierte Auflage des Wischgummis (72, 82) am Wischblatt (76, 86) erzeugen.

11. Wischgummi mit einem ersten Element (4, 34, 54, 74, 84) einer Klettverbindung (3, 33, 53, 73, 83) an seinem scheibenabgewandten Bereich, verbindbar mit einem zweiten Element (5, 35, 55, 75, 85) der Klettverbindung (3, 33, 53, 73, 83), das an einem Befestigungsabschnitt (1, 31, 51, 71, 81) eines Wischblattes (36, 56, 76, 86) nach einem der vorgenannten Ansprüche angeordnet ist.

## Claims

1. A wiper blade for a windscreen wiper for cleaning a vehicle window, comprising a squeegee,
**characterised in that** a first component (4, 34, 54, 74, 84) of a hook and loop connection (3, 33, 53, 73, 83) is provided on the squeegee (2, 32, 52, 72, 82) and co-operates with a second element (5, 35, 55, 75, 85) of the hook and loop connection (3, 33, 53, 73, 83) disposed on a fastening portion (1, 31, 51, 71, 81) of the wiper blade (36, 56, 76, 86).

2. A wiper blade according to claim 1, **characterised in that** the first element (4, 34, 54, 74) of the hook and loop connection (3, 33, 53, 73, 83) is connected to the squeegee (2, 32, 52, 72, 82) by vulcanisation.

3. A wiper blade according to claim 1 or 2, **characterised in that** the fastening portion (31, 51) on the wiper blade (36, 56) is formed of an elastomeric material which is inserted in the spring claw bracket (37, 57) of the wiper blade (36, 56).

4. A wiper blade according to claim 3, **characterised in that** the second component (35, 55) of the hook and loop connection (33, 53) is connected to the fastening portion (31, 51) by vulcanisation.

5. A wiper blade according to any of the preceding claims, **characterised in that** the fastening portion (31, 51) is formed with a recess (38, 58) extending in the longitudinal direction of the squeegee (32, 52) for positively receiving the squeegee (32, 52).

6. A wiper blade according to claim 5, **characterised in that** the recess (38, 58) has an undercut (41) for additional positive securing of the squeegee (32, 52).

7. A wiper blade according to claim 5 or 6, **characterised in that** the components (34, 35; 54, 55) of the hook and loop connection (33, 53) are inserted into a cavity (39) in the recess (38, 58), wherein the cavity (39) is offset from the recess (38, 58) by a step (40), the step (40) forming defined rest surfaces (42) for the squeegee (32, 52).

8. A wiper blade according to any of the preceding claims, **characterised in that** the second component (75, 85) of the hook and loop connection (73, 83) is connected by sticking to the fastening portion (71, 81) of the wiper blade (76, 86).

9. A wiper blade according to claim 8, **characterised in that** a retaining device (77, 87) for positively connecting the fastening portion (71, 81) of the wiper blade (76, 86) to the squeegee (72, 82) is attachable to the wiper blade (76, 86) by lateral engagement.

10. A wiper blade according to claim 9, **characterised in that** the retaining means (77, 87) comprises means (90, 92) for generating a defined resting position of the squeegee (72, 82) on the wiper blade (76, 86).

11. A squeegee comprising a first component (4, 34, 54, 74, 84) of a hook and loop connection (3, 33, 53, 73, 83) on its region remote from the windscreen, connectable to a second component (5, 35, 55, 75, 85) of the hook and loop connection (3, 33, 53, 73, 83) disposed on a fastening portion (1, 31, 51, 71, 81) of a wiper blade (36, 56, 76, 86) according to any of the preceding claims.

## Revendications

1. Balai d'essuie-glace pour un essuie-glace nettoyant la vitre d'un véhicule comportant une lame d'essuyage,
**caractérisé en ce que**
la lame d'essuyage (2, 32, 52, 72, 82) comprend un premier élément (4, 34, 54, 74, 84) d'une liaison à griffes (3, 33, 53, 73, 83), ce premier élément coopérant avec un second élément (5, 35, 55, 75, 85) de la liaison à griffes (3, 33, 53, 73, 83), ce second élément étant porté par un segment de fixation (1, 31, 51, 71, 81) du balai d'essuie-glace (36, 56, 76, 86).

2. Balai d'essuie-glace selon la revendication 1,
**caractérisé en ce que**
le premier élément (4, 34, 54, 74) de la liaison à griffes (3, 33, 53, 73, 83) est relié à la lame d'essuyage (2, 32, 52, 72, 82) en caoutchouc par vulcanisation.

3. Balai d'essuie-glace selon la revendication 1 et/ou 2,
**caractérisé en ce que**
le segment de fixation (31, 51) du balai (36, 56) est en un élastomère placé dans le palonnier à griffes élastiques (37, 57) du balai d'essuie-glace (36, 56).

4. Balai d'essuie-glace selon la revendication 3,
**caractérisé en ce que**
le second élément (35, 55) de la liaison à griffes (33, 53) est relié au segment de fixation (31, 51) par vulcanisation.

5. Balai d'essuie-glace selon l'une des revendications précédentes,
**caractérisé par**
une cavité (38, 58) dirigée dans la direction longitudinale de la lame d'essuie-glace (32, 52) sur le segment de fixation (31, 51) pour recevoir la lame d'essuie-glace (32, 52) par une liaison par la forme.

6. Balai d'essuie-glace selon la revendication 5,
**caractérisé en ce que**
la cavité (38, 58) comporte une partie en contre-dépouille (51) pour assurer un blocage complémentaire de liaison par la forme de la lame d'essuie-glace (32, 52).

7. Balai d'essuie-glace selon la revendication 5 ou 6,
**caractérisé en ce que**
les éléments (34, 35 ; 54, 55) de la liaison à griffes (33, 53) sont placés dans un creux (39) définis dans la cavité (38, 58) par un épaulement (40) qui forme des surfaces d'appui (42) déterminées pour la lame d'essuie-glace (32, 52).

8. Balai d'essuie-glace selon l'une des revendications précédentes,
**caractérisé en ce que**
le second élément (75, 85) de la liaison à griffes (73, 83) est collé au segment de fixation (71, 81) de la lame d'essuie-glace (76, 86).

9. Balai d'essuie-glace selon la revendication 8,
**caractérisé en ce qu'**
une installation de fixation (77, 87) reliant par la forme le segment de fixation (71, 81) du balai (76, 86) et la lame (72, 82), se met en place par accrochage latéral au balai (76, 86).

10. Balai d'essuie-glace selon la revendication 9,
**caractérisé en ce que**
l'installation de fixation (77, 87) comprend des moyens (90, 92) créant un appui déterminé de la lame (72, 82) contre le balai (76, 86).

11. Lame d'essuie-glace comportant un premier élément (4, 34, 54, 74, 84) d'une liaison à griffes (3, 33, 53, 73, 83) dans une zone non tournée vers la vitre et qui peut être reliée à un second élément (5, 35, 55, 75, 85) de la liaison à griffes (3, 33, 53, 73, 83) prévu sur un segment de fixation (1, 31, 51, 71, 81) d'un balai d'essuie-glace (36, 56, 76, 86) selon l'une des revendications précédentes.
